(19) Europäisches Patentamt

European Patent Office

Office européen des brevets

(11) **EP 4 200 925 B1**

(12) **EUROPÄISCHE PATENTSCHRIFT**

(45) Veröffentlichungstag und Bekanntmachung des Hinweises auf die Patenterteilung:
**31.12.2025 Patentblatt 2026/01**

(21) Anmeldenummer: **21762625.8**

(22) Anmeldetag: **04.08.2021**

(51) Internationale Patentklassifikation (IPC):
**H01M 4/96** *(2006.01)*   **H01M 4/86** *(2006.01)*
**H01M 4/88** *(2006.01)*   **H01M 8/10** *(2016.01)*

(52) Gemeinsame Patentklassifikation (CPC):
**H01M 4/96; H01M 4/8621; H01M 4/8652;**
**H01M 4/8657;** H01M 4/8882; H01M 4/8885;
H01M 2008/1095; Y02E 60/50

(86) Internationale Anmeldenummer:
**PCT/EP2021/071726**

(87) Internationale Veröffentlichungsnummer:
**WO 2022/037939 (24.02.2022 Gazette 2022/08)**

(54) **GASDIFFUSIONSLAGE FÜR BRENNSTOFFZELLEN MIT VERBESSERTEN BIEGEEIGENSCHAFTEN**

GAS DIFFUSION LAYER FOR FUEL CELLS WITH IMPROVED BENDING PROPERTIES

COUCHE DE DIFFUSION POUR PILES À COMBUSTIBLE AVEC UNE FLEXIBILITÉ AMÉLIORÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.08.2020 DE 102020121892**

(43) Veröffentlichungstag der Anmeldung:
**28.06.2023 Patentblatt 2023/26**

(73) Patentinhaber: **Carl Freudenberg KG**
**69469 Weinheim (DE)**

(72) Erfinder:
• BOCK, Achim
  69469 Weinheim (DE)
• KLEIN, Kristof
  69469 Weinheim (DE)
• RAKOUSKY, Christoph
  64372 Ober-Ramstadt (DE)
• BARSCH, Hannes
  69123 Heidelberg (DE)

(56) Entgegenhaltungen:
EP-A1- 2 722 917      EP-A2- 1 237 214
WO-A1-2006/117199     WO-A1-2011/020843
WO-A1-2013/144631     DE-A1- 19 709 199

**Beschreibung**

Die vorliegende Erfindung betrifft eine Gasdiffusionslage mit hoher Biegesteifigkeit und hoher Biegsamkeit, ein Verfahren zur Herstellung einer solchen Gasdiffusionslage und eine Brennstoffzelle, die eine solche Gasdiffusionslage enthält.

HINTERGRUND DER ERFINDUNG

Brennstoffzellen nutzen die chemische Umsetzung eines Brennstoffs, insbesondere von Wasserstoff, mit Sauerstoff zu Wasser, um elektrische Energie zu erzeugen. In Wasserstoff-Sauerstoff-Brennstoffzellen wird Wasserstoff oder ein wasserstoffhaltiges Gasgemisch der Anode zugeführt, wo eine elektrochemische Oxidation unter Abgabe von Elektronen stattfindet ($H_2 \rightarrow 2\,H^+ + 2\,e^-$). Über eine Membran, welche die Reaktionsräume gasdicht voneinander trennt und elektrisch isoliert, erfolgt ein Transport der Protonen aus dem Anodenraum in den Kathodenraum. Die an der Anode bereitgestellten Elektronen werden über einen äußeren Leiterkreis der Kathode zugeleitet. Der Kathode wird Sauerstoff oder ein sauerstoffhaltiges Gasgemisch zugeführt, wobei eine Reduktion des Sauerstoffs unter Aufnahme der Elektronen stattfindet. Die dabei gebildeten Sauerstoffanionen reagieren mit den über die Membran transportierten Protonen unter Bildung von Wasser ($1/2\,O_2 + 2\,H^+ + 2\,e^- \rightarrow H_2O$).

Für viele Anwendungen, speziell im automobilen Antriebsstrang, werden Niedertemperatur-Protonenaustauschmembran-Brennstoffzellen (PEMFC, proton exchange membrane fuel cells, auch als polymer electrolyte membrane fuel cells bezeichnet) eingesetzt, deren Kernstück eine Polymer-Elektrolyt-Membran (PEM) ist, die nur für Protonen (bzw. Oxoniumionen $H_3O^+$) und Wasser durchlässig ist und das Oxidationsmittel, im Allgemeinen Luftsauerstoff, räumlich vom Reduktionsmittel trennt. Auf die gasdichte, elektrisch isolierende, protonenleitende Membran ist auf der Anoden- und Kathodenseite eine Katalysatorschicht aufgebracht, die die Elektroden ausbildet und die in der Regel Platin als katalytisch aktives Metall enthält. In den Katalysatorschichten laufen die eigentlichen Redoxreaktionen und Ladungstrennungen ab. Membran und Katalysatorschichten bilden eine Einheit, die auch als CCM (catalyst coated membrane) bezeichnet wird. Auf beiden Seiten der CCM befindet sich eine Gasdiffusionslage (GDL), die den Zellaufbau stabilisiert und Transport- und Verteilerfunktionen für Reaktionsgase, Wasser, Wärme und Strom übernimmt. Membran, Elektroden und Gasdiffusionslage bilden die Membran-Elektroden-Einheit (MEA, membrane electrode assembly). Zwischen den Membran-Elektroden-Einheiten sind Strömungsverteilerplatten (sogenannte Bipolarplatten) angeordnet, die Kanäle zur Versorgung der angrenzenden Kathode und Anode mit Prozessgasen sowie in der Regel zusätzlich innenliegende Kühlkanäle aufweisen.

Den zwischen den Strömungsverteilerplatten und den Katalysatorschichten befindlichen Gasdiffusionslagen kommt eine wesentliche Bedeutung für die Funktion und Leistungsfähigkeit der Brennstoffzelle zu. So müssen die in den Elektrodenreaktionen verbrauchten und entstehenden Prozesskomponenten durch die Gasdiffusionslage transportiert und von der makroskopischen Struktur der Strömungsverteilerplatten/Bipolarplatten auf die mikroskopische Struktur der Katalysatorschichten homogen verteilt werden. Die in den Halbzellenreaktionen gebildeten und verbrauchten Elektronen müssen mit möglichst geringem Spannungsverlust zu den Strömungsverteilerplatten geleitet werden. Die bei der Reaktion gebildete Wärme muss zum Kühlmittel in den Strömungsverteilerplatten abgeführt werden, so dass die Materialien der GDL auch über ausreichende Wärmeleitfähigkeit verfügen müssen. Zudem muss die GDL auch als mechanischer Ausgleich zwischen der makrostrukturierten Strömungsverteilerplatte und den Katalysatorschichten wirken. Dazu müssen Bauteiltoleranzen ausgeglichen und der Kompressionsdruck verteilt werden. Die GDL dient auch als mechanischer Schutz der sehr dünnen Membranen, die in den Brennstoffzellen hohen Lasten ausgesetzt sind. Daher werden speziell an die mechanischen Eigenschaften der GDL hohe Anforderungen gestellt.

Gasdiffusionslagen für Brennstoffzellen bestehen typischerweise aus einem Kohlefaser-Substrat, welches üblicherweise mit Fluor-Polymeren (z. B. PTFE) hydrophob ausgerüstet ist und anschließend mit einer mikroporösen Lage (MPL) flächig beschichtet wird. Die MPL besteht in der Regel aus einem fluorhaltigen Polymer als Binder (z. B. PTFE) sowie einem porösen und elektrisch leitfähigen Kohlenstoffmaterial (z. B. Ruß oder GraphitPulver). Als Kohlefaser-Substrate für die GDL werden aktuell die drei folgenden Materialien eingesetzt:

- Kohlefaser-Papiere (nassgelegte und chemisch gebundene Kohlefaser-Vliesstoffe, mit chemischen Bindern, die karbonisiert werden),
- Kohlefaser-Gewebe (z. B. aus Garnen aus oxidierten aber noch nicht karbonisierten Polyacrylnitril-Fasern, die nach dem Weben karbonisiert bzw. graphitisiert werden),
- Kohlefaser-Vliesstoffe (z.B. trockengelegte, kardierte und Wasserstrahl-verfestige Vliesstoffe aus oxidiertem Polyacrylnitril, die anschließend dickenkalibriert und karbonisiert werden).

Kohlefaser-Papiere haben den technischen Vorteil einer hohen Festigkeit gegenüber unterschiedlichen Belastungsarten (Zug, Biegung, Scherung). Dadurch ist eine gute Kraftübertragung von den Stegen der Strömungsverteilerplatten/Bipolarplatten in die Kanalbereiche gegeben, was für eine homogene Flächenpressung und Anbindung der Elektroden durch die GDL sorgt. Verbunden sind diese Vorteile allerdings immer mit einer starken Materialversprödung, was sich durch ein Brechen der Papiere bereits bei geringer Biegebeanspruchung zeigt. Ursachen für dieses Verhalten sind das Produktdesign sowie das Herstellungsverfahren. Speziell die zur Herstellung der Kohlefaser-Papiere eingesetzten chemischen Binder (in der Regel Phenolharze) verspröden bei der Karbonisierung stark und verursachen das beschriebene Materialverhalten.

In der Festigkeitslehre unterscheidet man in Abhängigkeit von den auf ein Bauteil einwirkenden Kräften verschiedene Belastungsarten. Es besteht ein Bedarf an Materialien für Gasdiffusionslagen, die sich bei ansonsten gleichwertigen mechanischen Eigenschaften vorteilhaft bei Geometrieveränderungen verhalten, wie sie bei Biegebelastungen auftreten (z.B. Durchbiegung, Krümmung). Die bisher eingesetzten Materialien weisen dabei noch nicht die optimale Eigenschaftskombination auf. So sind diese Materialien entweder biegesteif und spröde (Papiere) oder sie sind biegeweich und biegsam (Vliesstoffe, Gewebe). Wünschenswert wäre eine Kombination von hoher Biegesteifigkeit und hoher Biegsamkeit.

Die WO 2015/118323 (DE 112015000657 T5) beschreibt ein poröses Gasdiffusionssubstrat, das folgende Bestandteile umfasst:

(a) ein poröses Vliesgewebe, das Kohlenstofffasern umfasst,
(b) einen kohlenstoffhaltigen Rückstand, der in das poröse Vliesgewebe eingebettet ist,
(c) ein fluoriertes Polymer und
(d) inerte Partikel, wobei mindestens einige der Kohlenstofffasern des porösen Vliesgewebes eine das fluorierte Polymer und die inerten Partikel umfassende Beschichtung aufweisen.

Die Herstellung des porösen Gasdiffusionssubstrats umfasst die folgenden Stufen:

(i) Bereitstellen eines porösen Vliesgewebes, das Kohlenstofffasern umfasst;
(ii) Bereitstellen einer Dispersion, die ein carbonisierbares Harz umfasst;
(iii) Imprägnieren des porösen Vliesgewebes mit der Dispersion aus Stufe (ii);
(iv) Härten des carbonisierbaren Harzes bei einer Temperatur von 100°C bis 300°C;
(v) Wärmebehandlung zum Carbonisieren/Graphitisieren des carbonisierbaren Harzes bei einer Temperatur von 900°C bis 3000°C zur Bereitstellung eines Gasdiffusionssubstratvorläufers;
(vi) Bereitstellen einer Wasser, fluoriertes Polymer und inerte Partikel umfassenden Dispersion;
(vii) Behandeln des Gasdiffusionssubstratvorläufers mit der in Stufe (vi) hergestellten Dispersion;
(viii) Trocknen; und
(ix) Erwärmen auf eine Temperatur von bis zu 400°C zur Bereitstellung des Gasdiffusionssubstrats.

Die Imprägnierung des porösen Vliesgewebes mit einem carbonisierbaren Harz und das anschließende Carbonisieren führen zu einer Versprödung des Materials, so dass die resultierenden Gasdiffusionssubstrate über eine hohe Biegesteifigkeit, nicht aber über eine gute Biegsamkeit verfügen.

Die WO 97/20358 betrifft eine Gasdiffusionselektrode für Polymerelektrolytmembranbrennstoffzellen mit einer Gasdiffusionslage, die ein mechanisch stabiles Stützmaterial enthält, wobei es sich um ein Vlies, Gewebe oder Papier handeln kann, das Kohlefasern, Glasfasern oder Fasern organischer Polymere enthält. Zur Herstellung der Gasdiffusionselektrode wird auf das Stützmaterial eine Suspension aufgetragen oder dieses mit einer Suspension getränkt, die ein elektrisch leitfähiges Material, z.B. Ruß, und ein Bindermaterial enthält. Als geeignete Bindermaterialien werden temperaturstabile Polymere, wie z.B. perfluorierte Polymere, Polyetherketone, Polyethersulfone, Polysulfone, Polybenzimidazole, Polyphenylensulfide, Polyimide, Polyamide und Polyphenylenoxide genannt. Es ist erwähnt, dass in Abhängigkeit von der gewünschten Hydrophobizität auch mehrere Binder gemischt werden können. Dieses Dokument lehrt nicht, zur Optimierung der mechanischen Eigenschaften, speziell gegenüber einer Biegebelastung eine Kombination aus speziellen fluorhaltigen Polymeren und speziellen Hochleistungspolymeren einzusetzen.

Der vorliegenden Erfindung liegt die Aufgabe zugrunde, ein flächiges elektrisch leitfähiges Material und eine darauf basierende Gasdiffusionslage für eine Brennstoffzelle bereit zu stellen, wobei die zuvor genannten Nachteile vermieden werden.

Überraschenderweise wurde nun gefunden, dass diese Aufgabe gelöst wird und ein flexibel versteiftes Verbundmaterial erzielt wird, das sich besonders vorteilhaft für Gasdiffusionslagen eignet, wenn man ein Kohlefaser-Substrat in Form eines Vliesstoffes oder Gewebes mit einem hydrophoben Fluor-Polymer und mit bestimmten thermoplastischen Hochleistungskunststoffen ausrüstet.

ZUSAMMENFASSUNG DER ERFINDUNG

Ein erster Gegenstand der Erfindung ist eine Gasdiffusionslage für eine Brennstoffzelle, die

A) ein flächiges elektrisch leitfähiges Material, umfassend

    a) wenigstens ein Fasermaterial, ausgewählt unter Kohlefaser-Vliesstoffen, Kohlefaser-Geweben und Mischungen davon,

    wobei das Fasermaterial

        b1) wenigstens ein fluorhaltiges Polymer, und
        b2) wenigstens ein von b1) verschiedenes Polymer, ausgewählt unter Polyaryletherketonen, Polyphenylensulfiden, Polysulfonen, Polyethersulfonen, teilaromatischen (Co)polyamiden, Polyimiden, Polyamidimiden, Polyetherimiden und Mischungen davon,

    darauf aufgebracht und/oder darin eingebracht enthält,

    und
B) gegebenenfalls eine mikroporöse Lage auf einer der Flächen des elektrisch leitfähiges Materials A)

umfasst.

Eine spezielle Ausführung ist eine Gasdiffusionslage, wobei das flächige elektrisch leitfähige Material A) erhältlich ist durch Beschichten und/oder Imprägnieren wenigstens eines Fasermaterials a), ausgewählt unter Kohlefaser-Vliesstoffen, Kohlefaser-Geweben und Mischungen davon, mit einer wässrigen Zusammensetzung, enthaltend wenigstens ein fluorhaltiges Polymer b1), und wenigstens ein von b1) verschiedenes Polymer b2), ausgewählt unter Polyaryletherketonen, Polyphenylensulfiden, Polysulfonen, Polyethersulfonen, teilaromatischen (Co)polyamiden, Polyimiden, Polyamidimiden,

Polyetherimiden und Mischungen davon, und anschließendes Trocknen und/oder Sintern des behandelten Fasermaterials, wobei die Sinterung durch thermische Behandlung bei einer Temperatur in einem Bereich von 300 bis 450 °C erfolgt.

Ein weiterer Gegenstand der Erfindung ist ein Verfahren zur Herstellung einer Gasdiffusionslage für eine Brennstoffzelle, umfassend ein flächiges elektrisch leitfähiges Material A) bei dem man

    i) wenigstens ein Fasermaterial bereitstellt, ausgewählt unter Kohlefaser-Vliesstoffen, Kohlefaser-Geweben und Mischungen davon,
    ii) das in Schritt i) bereitgestellte Fasermaterial mit einer Zusammensetzung beschichtet und/oder imprägniert, die wenigstens ein fluorhaltiges Polymer b1) und wenigstens ein von b1) verschiedenes Polymer b2), das ausgewählt ist aus Polyetherketonen, Polyphenylensulfiden, Polysulfonen, Polyethersulfonen, teilaromatischen (Co)polyamiden, Polyimiden, Polyamidimiden, Polyetherimiden und Mischungen davon, enthält,
    iii) das beschichte und/oder imprägnierte Fasermaterial einer Trocknung und/oder Sinterung unterzieht, wobei die Sinterung durch thermische Behandlung bei einer Temperatur in einem Bereich von 300 bis 450°C erfolgt, und
    iv) gegebenenfalls das getrocknete und/oder gesinterte Fasermaterial mit einer mikroporösen Lage beschichtet.

Ein weiterer Gegenstand ist eine Brennstoffzelle, umfassend wenigstens eine Gasdiffusionslage, wie zuvor und im Folgenden definiert, oder erhältlich durch ein Verfahren, wie zuvor und im Folgenden definiert.

Ein weiterer Gegenstand der Erfindung ist die Verwendung eines flächigen elektrisch leitfähigen Materials A), umfassend

    a) wenigstens ein Fasermaterial, ausgewählt unter Kohlefaser-Vliesstoffen, Kohlefaser-Geweben und Mischungen davon,

    wobei das Fasermaterial

    b1) wenigstens ein fluorhaltiges Polymer, und
    b2) wenigstens ein von b1) verschiedenes Polymer, ausgewählt unter Polyetherketonen, Polyphenylensulfiden, Polysulfonen, Polyethersulfonen, teilaromatischen (Co)polyamiden, Polyimiden, Polyamidimiden, Polyetherimiden und Mischungen davon,

    darauf aufgebracht und/oder darin eingebracht enthält,
als eine oder in einer Gasdiffusionslage für eine Brennstoffzelle.

BESCHREIBUNG DER ERFINDUNG

Die erfindungsgemäß eingesetzten flächigen elektrisch leitfähigen Materialien und darauf basierende Gasdiffusionslagen haben folgende Vorteile:

- sie kombinieren gute anwendungstechnische Produkteigenschaften mit einer guten Verarbeitbarkeit,
- im Vergleich zu den bisher bevorzugt eingesetzten versteiften Kohlefaser-Papieren weisen sie ein verbessertes Biegeverhalten bei ansonsten vergleichbaren mechanischen Eigenschaften auf,
- es wird erstmals eine Eigenschaftskombination aus biegesteif und biegsam erzielt,
- speziell lässt sich im 3-Punkt-Biegeversuch eine deutlich größere maximale Durchbiegung (entweder bis zum Bruch oder bis zum Abgleiten der Probekörper von den Stützstellen) bzw. ein deutlich größerer Biegewinkel bei vergleichbaren Biegesteifigkeiten bzw. Biegemodulen erzielen.

Biegeversuche

Die Bestimmung der Biegeeigenschaften kann nach üblichen, dem Fachmann bekannten Verfahren erfolgen, wie sie z.B. in der DIN EN ISO 178:2019-08 (Kunststoffe - Bestimmung der Biegeeigenschaften) beschrieben sind. Das Prinzip der Biegeprüfung beruht auf einer Biegevorrichtung, in der ein Probekörper als Biegebalken auf zwei Auflagern positioniert ist und in der Mitte über ein inneres Auflager belastet wird (3-Punkt-Biegeversuch). Die Prüfung erfolgt durch Messung der Mittendurchbiegung bei konstanter Geschwindigkeit bis zu einer vorgegebenen Verformung oder bis zum Versagen der Probe (= maximale Durchbiegung bis zum Bruch oder Abgleiten der Probekörper von den Stützlagern).
Als Ergebnis der Biegeversuche kann zum einen die Biegesteifigkeit [N/mm] ermittelt werden als die Steigung des anfänglich geradlinigen Abschnitts der Lastverformungskurve. Diese kann aus dem Kraft/Weg-Diagramm abgelesen werden, d.h. in der unten angegebenen Formel: $(X_H - X_L)/D_L$. Die Biegesteifigkeit ist ein Maß für den Widerstand eines biegebeanspruchten Bauteils gegen eine Verformung.
Weiterhin kann der Biegemodul E [N/mm² oder MPa] ermittelt. Der Biegemodul errechnet sich dabei wie folgt:

$$E = (l_v^3(X_H - X_L)) / (4D_Lba^3)$$

mit

E: Biegemodul in kN/mm²
$l_v$: Stützweite in mm
$X_H$: Ende der Biegemodulermittlung in kN
$X_L$: Beginn der Biegemodulermittlung in kN
$D_L$: Durchbiegung in mm zwischen $X_H$ und $X_L$
b: Probenbreite in mm
a: Probendicke in mm

Aus der maximalen Durchbiegung sowie dem halben Abstand der beiden Stützstellen läßt sich zudem der maximale Biegewinkel $\alpha$ berechnen:

$$\alpha = arctan \ (max. \ Durchbiegung \ / \ halbe \ Stützweite)$$

Bevorzugt weist das flächige elektrisch leitfähige Material A) oder ein Sinterungsprodukt davon eine Biegesteifigkeit, bestimmt durch Mittenbeanspruchung in einem 3-Punkt-Biegeversuch nach DIN EN ISO 178:2019-08 an einem rechteckigen Prüfkörper von 50 mm Breite, 0,13 mm Dicke und 100 mm Länge bei einer Stützweite von 32 mm und einer Prüfgeschwindigkeit von 2 mm/min von 0,05 bis 0,08 N/mm auf.
Bevorzugt weist das flächige elektrisch leitfähige Material A) oder ein Sinterungsprodukt davon einen maximalen Biegewinkel $\alpha$, bestimmt durch Mittenbeanspruchung in einem 3-Punkt-Biegeversuch nach DIN EN ISO 178:2019-08 an einem rechteckigen Prüfkörper von 50 mm Breite, 0,13 mm Dicke und 100 mm Länge bei einer Stützweite von 32 mm und einer Prüfgeschwindigkeit von 2 mm/min von 50 bis 60° auf.
Bevorzugt weist das flächige elektrisch leitfähige Material A) oder ein Sinterungsprodukt davon ein Biegemodul, bestimmt durch Mittenbeanspruchung in einem 3-Punkt-Biegeversuch nach DIN EN ISO 178:2019-08 an einem rechteckigen Prüfkörper von 50 mm Breite, 0,13 mm Dicke und 100 mm Länge bei einer Stützweite von 32 mm und einer Prüfgeschwindigkeit von 2 mm/min von 3000 bis 6000 N/mm² auf.
Bevorzugt weist eine erfindungsgemäße Gasdiffusionslage, die ein flächiges elektrisch leitfähige Material und eine mikroporöse Lage umfasst, eine Biegesteifigkeit, bestimmt durch Mittenbeanspruchung in einem 3-Punkt-Biegeversuch nach DIN EN ISO 178:2019-08 an einem rechteckigen Prüfkörper von 50 mm Breite, 0,16 mm Dicke und 100 mm Länge bei einer Stützweite von 32 mm und einer Prüfgeschwindigkeit von 2 mm/min von 0,08 bis 0,12 N/mm auf.

Bevorzugt weist eine erfindungsgemäße Gasdiffusionslage, die ein flächiges elektrisch leitfähige Material und eine mikroporöse Lage umfasst, einen maximalen Biegewinkel $\alpha$, bestimmt durch Mittenbeanspruchung in einem 3-Punkt-Biegeversuch nach DIN EN ISO 178:2019-08 an einem rechteckigen Prüfkörper von 50 mm Breite, 0,16 mm Dicke und 100 mm Länge bei einer Stützweite von 32 mm und einer Prüfgeschwindigkeit von 2 mm/min von 50 bis 60° auf.

Bevorzugt weist eine erfindungsgemäße Gasdiffusionslage, die ein flächiges elektrisch leitfähige Material und eine mikroporöse Lage umfasst, ein Biegemodul, bestimmt durch Mittenbeanspruchung in einem 3-Punkt-Biegeversuch nach DIN EN ISO 178:2019-08 an einem rechteckigen Prüfkörper von 50 mm Breite, 0,16 mm Dicke und 100 mm Länge bei einer Stützweite von 32 mm und einer Prüfgeschwindigkeit von 2 mm/min von 3000 bis 6000 N/mm$^2$ auf.

Gasdiffusionslage

Bei dem erfindungsgemäß eingesetzten flächigen elektrisch leitfähigen Material und der Gasdiffusionslage handelt es sich um flächenförmige Gebilde, die über eine im Wesentlichen zweidimensionale, ebene Ausdehnung und eine demgegenüber geringere Dicke verfügen. Die Gasdiffusionslage weist eine Grundfläche auf, die in der Regel im Wesentlichen der Grundfläche der angrenzenden Membran mit den Katalysatorschichten und der Grundfläche der angrenzenden Strömungsverteilerplatte der Brtennstoffzelle entspricht. Die Form der Grundfläche der Gasdiffusionslage kann beispielsweise polygonal (n-eckig mit n ≥ 3, z. B. dreieckig, viereckig, fünfeckig, sechseckig, etc.), kreisförmig, kreissegmentförmig (z. B. halbkreisförmig), ellipsenförmig oder ellipsensegmentförmig sein. Bevorzugt ist die Grundfläche rechteckig oder kreisförmig.

Die Gasdiffusionslage umfasst als Komponente A) einen Faserverbundwerkstoff aus wenigstens einem elektrisch leitfähigen flächigen Kohlefasermaterial a), wenigstens einem fluorhaltigen Polymer b1) und wenigstens einem von b1) verschiedenen Polymer b2), ausgewählt unter Polyetherketonen, Polyphenylensulfiden, Polysulfonen, Polyethersulfonen, teilaromatischen (Co)polyamiden, Polyimiden, Polyamidimiden, Polyetherimiden und Mischungen davon. Wie im Folgenden näher beschrieben wird, kann die Komponente b1) dazu dienen, die Hydrophobizität des Fasermaterials a) zu erhöhen. Die Komponente b2) kann dazu dienen, das flächige elektrisch leitfähige Material bzw. die Gasdiffusionslage zu versteifen. Durch die Kombination der Komponenten a), b1) und b2) werden die zuvor beschriebenen vorteilhaften mechanischen Eigenschaften und speziell ein vorteilhaftes Biegeverhalten erzielt. Dazu kann das wenigstens eine Fasermaterial a) durch übliche Auftrags- und Imprägnierungsverfahren mit den Polymerkomponenten b1) und b2) und gegebenenfalls weiteren Additiven ausgerüstet werden. Derartige Verfahren werden im Folgenden näher beschrieben.

Das wenigstens eine Fasermaterial a) ist ausgewählt unter Kohlefaser-Vliesstoffen, Kohlefaser-Geweben und Mischungen davon, die die Polymerkomponenten b1) und b2) darauf aufgebracht und/oder darin eingebracht enthalten. Bevorzugt umfasst das Fasermaterial a) wenigstens einen Kohlefaser-Vliesstoff. In einer speziellen Ausführungsform besteht das Fasermaterial a) aus einem Kohlefaser-Vliesstoff.

Die in dem Fasermaterial a) enthaltenen Fasern umfassen Kohlenstofffasern (Kohlefasern, Carbonfasern) und gegebenenfalls davon verschiedene Fasern, vorzugsweise ausgewählt unter Glasfasern, Fasern organischer Polymere, wie Polypropylen, Polyester, Polyphenylensulfid, Polyetherketonen, und Mischungen davon. Speziell bestehen die in dem Fasermaterial a) enthaltenen Fasern nur aus Kohlenstofffasern.

Die Herstellung der Kohlenstofffasern kann in üblicher Weise erfolgen, wobei als Ausgangsmaterial vorzugsweise Polyacrylnitril-Fasern (PAN-Fasern) eingesetzt werden. PAN-Fasern werden hergestellt durch radikalische Polymerisation einer Monomerzusammensetzung, die vorzugsweise wenigstens 90 Gew.-%, bezogen auf das Gesamtgewicht der zur Polymerisation eingesetzten Monomere, Acrylnitril enthält. Die erhaltene Polymerlösung wird, z. B. durch Nassspinnen und Koagulation, zu Filamenten versponnen und zu Tauen zusammengefasst. Bevor dieser PAN-Precursor unter hohen Temperaturen zu Kohlenstofffasern umgewandelt wird, wird er in der Regel in einer sauerstoffhaltigen Atmosphäre bei erhöhten Temperaturen von etwa 180 bis 300 °C einer oxidativen Cyclisierung (auch kurz als Oxidation bezeichnet) unterzogen. Durch die dabei resultierende chemische Vernetzung wird die Formstabilität der Fasern verbessert. Anschließend erfolgt bei Temperaturen von wenigstens 1200 °C die eigentliche Pyrolyse zu Kohlenstofffasern. Für diese Pyrolyse können in Abhängigkeit von der Form des angestrebten Fasermaterials entweder die Ausgangsfasern oder bereits ein flächiges Fasermaterial eingesetzt werden. In Abhängigkeit von der Temperatur bei der Pyrolyse unterscheidet man zwischen Carbonisierung und Graphitisierung. Carbonisierung bezeichnet eine Behandlung bei etwa 1200 bis 1500 °C unter Inertgasatmosphäre, die zur Abspaltung flüchtiger Produkte führt. Durch Graphitisierung, d. h. Erhitzen auf etwa 2000 bis 3000 °C unter Inertgas, erhält man so genannte Hochmodul- oder Graphitfasern. Diese Fasern verfügen über eine hohe Reinheit, sind leicht, hoch fest und sehr gut leitfähig für Elektrizität und Wärme.

Bei Kohlefasergeweben wird das flächige Fasermaterial durch das Verkreuzen von zwei Fadensystemen, Kette (Kettfäden) und Schuss (Schussfäden), hergestellt. Wie bei Textilien werden Faserbündel flexibel, aber unlösbar miteinander verbunden. Zur Herstellung von Kohlefasergeweben werden vorzugsweise oxidierte, aber noch nicht karbonisierte oder graphitierte PAN-Fasern eingesetzt. Die Karbonisierung oder Graphitierung, um dem flächigen Fasermaterial elektrische Leitfähigkeit zu verleihen, erfolgt nach dem Weben.

Zur Herstellung von Kohlefaser-Vliesstoffen können nicht oxidierte oder oxidierte PAN-Fasern eingesetzt werden. In einer ersten bevorzugten Ausführungsform werden die Fasern in einem ersten Schritt trocken zu einem Flor gelegt (kardiert) und anschließend zu einem Vlies verfestigt. Dies kann beispielsweise durch Wasserstrahlverfilzung (hydroentangling) erfolgen, wobei die Karbonfasern orientiert, verschränkt und somit mechanisch stabilisiert werden. Gegebenenfalls kann die Dicke des verfestigten Vliesstoffs auf einen gewünschten Wert kalibriert werden. Vliese auf Basis nicht oxidierter PAN-Fasern werden nach dem Vlieslegen und Verfestigen zunächst der Oxidation bei erhöhter Temperatur und unter Sauerstoffatmosphäre und anschließend der Karbonisierung/Graphitisierung unter Inertgasatmosphäre unterzogen. Vliese auf Basis oxidierter PAN-Fasern werden nach dem Vlieslegen und Verfestigen nur einer Karbonisierung/Graphitisierung unterzogen. Kohlefaser-Vliesstoffe, zu deren Herstellung die Fasern in einem ersten Schritt trocken zu einem Flor gelegt werden, sind eine bevorzugte Ausführung der Erfindung.

Wenn als Fasermaterial a) ein gebundenes Fasermaterial eingesetzt wird, so ist dieses insbesondere ausgewählt unter mechanisch gebundenen Fasermaterialien. Eine chemische Bindung, speziell mit carbonisierbaren polymeren Bindern, kann sich nachteilig auf die Biegeeigenschaften der Gasdiffusionslage auswirken. Speziell enthalten die erfindungsgemäß eingesetzten Fasermaterialien keine von den Polymeren b1) und b2) verschiedenen Polymere als Binder zugesetzt.

In einer weiteren geeigneten Ausführungsform werden die Fasern in einem ersten Schritt nass gelegt. In dieser Ausführung umfasst der Begriff Kohlefaser-Vliesstoff dann auch z.B. ein nassgelegtes Material, welches aus Kurzschnitt-Carbonfasern, Ruß, wenigstens einem Polymer b1), speziell PTFE, und wenigstens einem Polymer b2), speziell PEEK, besteht. Im Unterschied zu aus dem Stand der Technik bekannten Kohlefaser-Papieren weisen die erfindungsgemäß eingesetzten nassgelegten Fasermaterialien keine oder nur einen sehr geringen Anteil an Phenolharzen als Binder auf. Bevorzugt beträgt der Massenanteil an Phenolharzen 0 bis 10 %, bevozugt 0 bis 5 %, insbesondere 0 bis 1 %, bezogen auf die Masse des Fasermaterials a). Speziell enthalten die erfindungsgemäß eingesetzten nassgelegten Fasermaterialien keine Phenolharze als Binder. Noch spezieller enthalten die erfindungsgemäß eingesetzten nassgelegten Fasermaterialien keine von den Polymeren b1) und b2) verschiedene Polymere als Binder.

In einer speziellen Ausführungsform umfasst das flächige elektrisch leitfähige Fasermaterial a) wenigstens einen Kohlefaser-Vliesstoff. Diese sind unter Anderem vorteilhaft, da sie kompressionselastisch sind und einfach großtechnisch, z. B. in einem Rolle-zu-Rolle-Verfahren, hergestellt werden können.

Erfindungsgemäß werden die Fasermaterialien a) mit wenigstens einem fluorhaltigen Polymer b1), wenigstens einem von b1) verschiedenen Polymer b2) und gegebenenfalls wenigstens einem weiteren Additiv ausgerüstet.

Speziell enthält das Fasermaterial a)

- wenigstens ein fluorhaltiges Polymer b1),
- wenigstens ein von b1) verschiedenes Polymer b2), ausgewählt unter Polyaryletherketonen, Polyphenylensulfiden, Polysulfonen, Polyethersulfonen, teilaromatischen (Co)polyamiden, Polyimiden, Polyamidimiden, Polyetherimiden und Mischungen davon,
- gegebenenfalls wenigstens ein leitfähigkeitsverbesserndes Additiv b3),
- gegebenenfalls wenigstens ein weiteres Additiv b4), das ausgewählt ist unter
- von b1) und b2) verschiedenen polymeren Bindemitteln b41),
- oberflächenaktiven Substanzen b42),
- weiteren Zusatz- und Hilfsstoffen b43),

darauf aufgebracht und/oder darin eingebracht.

Im Folgenden bezieht sich die Masse oder das Gesamtgewicht des Fasermaterials a) auf das nicht ausgerüstete Fasermaterial, d.h. ohne die Komponenten b1), b2) und, falls vorhanden, b3) und b4).

In einer speziellen Ausführungsform enthält das Fasermaterial a) keine zugesetzten polymeren Bindemitteln b41). Dies gilt speziell für polymere Bindemittel b41), die unter den Herstellungsbedingungen des flächigen elektrisch leitfähigen Materials A) carbonisieren würden.

Polymer b1)

Bevorzugt ist das fluorhaltige Polymer b1) ausgewählt unter Polytetrafluorethylenen (PTFE), Tetrafluorethylen-Hexafluorpropylen-Copolymeren (FEP), Perfluoralkoxy-Polymeren (PFA) und Mischungen davon. Perfluoralkoxy-Polymere sind z.B. Copolymere aus Tetrafluorethylen (TFE) und Perfluoralkoxyvinylethern, wie Perfluorvinylpropylether. Bevorzugt wird als Polymer b1) ein Polytetrafluorethylen eingesetzt.

Bevorzugt beträgt der Massenanteil des fluorhaltigen Polymers b1) 0,5 bis 40 %, bevozugt 1 bis 20 %, insbesondere 1 bis 10 %, bezogen auf die Masse des Fasermaterials a). In einer speziellen Ausführungsform ist das fluorhaltige Polymers b1) PTFE und beträgt der Massenanteil des 0,5 bis 40 %, bevozugt 1 bis 20 %, insbesondere 1 bis 10 %, bezogen auf die Masse des Fasermaterials a).

Polymer b2)

In einer bevorzugten Ausführungsform ist das Polymer b2) ausgewählt unter sogenannten Hochleistungskunststoffen, die sich durch Eigenschaften, wie eine hohe Glasübergangstemperatur, eine hohe Schmelztemperatur, gute Temperaturbeständigkeit, gute Chemikalienbeständigkeit und gute mechanische Eigenschaften auszeichnen. Bevorzugt weisen die Polymere b2) eine dauerhafte Betriebstemperatur (Dauergebrauchstemperatur) von wenigstens 150°C auf.

Bevorzugt als Polymere b2) sind teilaromatische und aromatische Polymere. Bevorzugt handelt es sich bei den Polymeren b2) um Thermoplaste.

Bevorzugt sind die Polymere b2) ausgewählt unter Polyaryletherketonen (PAEK), Polyphenylensulfiden (PPS), Polysulfonen (PSU), Polyethersulfonen (PES), teilaromatischen (Co)polyamiden (Hochtemperaturpolyamiden, HTPA), Polyimiden (PI), Polyamidimiden (PAI), Polyetherimiden (PEI) und Mischungen (Blends) davon. Geeignete Polymere b2) sind auch (teil)aromatische Polyester, wie PET oder PBT, Polycarbonate (PC) und temperaturbeständige Melamine, wie mit nanoporösen $SiO_2$- Aerogelen gefüllte Melaminschäume.

In einer bevorzugten Ausführung umfasst die Polymerkomponente b2) wenigstens ein Polyaryletherketon. Speziell besteht die Polmerkomponente b2) aus wenigstens einem Polyaryletherketon. Polyaryletherketone (PAEK) sind teilkristalline Thermoplaste, die einen alternierenden Aufbau aufweisen, bei dem auf eine Arylgruppe jeweils eine Ketogruppe (Carbonylgruppe) oder Ethergruppe folgt, wobei die Anteile an den Keto- und Ethergruppen variabel sind und sich im Substitutionsmuster an den Arylringen unterscheiden können. Geeignete Polyaryletherketone b2) sind Polyetherketone (PEK), Polyetheretherketone (PEEK), Polyetherketonketone (PEKK), etc. Bevorzugt umfasst die Polymerkomponente b1) wenigstens ein Poletheretherketon oder besteht aus wenigstens einem Polyetheretherketon.

Geeignete teilaromatischen (Co)polyamiden b2) sind die als Hochtemperaturpolyamide (HTPA) bezeichneten Polymere. Dabei handelt es sich um teilkristalline oder amorphe, thermoplastische, teilaromatische Polyamide. Bevorzugt enthalten diese wenigstens eine aromatische Dicarbonsäure einpolymerisiert, insbesondere ausgewählt unter Terephthalsäure, Isophthalsäure und Gemischen aus Terephthalsäure und Isophthalsäure. Bevorzugte teilaromatische (Co)polyamide b2) sind ausgewählt unter PA 6.T, PA 10.T, PA 12.T, PA 6.I, PA 10.I, PA 12.I, PA 6.T/6.I, PA 6.T/6, PA 6.T/10T, PA 10.T/6.T, PA 6.T/12.T, PA12.T/6.T und Gemischen davon. Eine weitere spezielle Ausführungsform der Polyamide b2) ist Polyphthalamid (PPA).

Geeignete Polyimide b2) sind Polysuccinimid (PSI), Polybismaleinimid (PBMI), Polyimidsulfon (PISO) und Polymethacrylimid (PMI).

Bevorzugt beträgt der Massenanteil des Polymers b2) 0,5 bis 40 %, bevorzugt 1 bis 20 %, bezogen auf die Masse des Fasermaterials a). In einer speziellen Ausführungsform ist das Polymers b2) ausgewählt unter PEEK, PPS und Mischungen davon und beträgt der Massenanteil des Polymers b2) 0,5 bis 40 %, bevorzugt 1 bis 20 %, bezogen auf die Masse des Fasermaterials a).

weitere Additive

Vielfach verfügt das Fasermaterial a) bereits durch die eingesetzten Kohlenstofffasern, auch ohne leitfähigkeitsverbessernde Additive, über eine gute elektrische und thermische Leitfähigkeit. Zur Verbesserung der elektrischen und der thermischen Leitfähigkeit kann das Fasermaterial a) jedoch zusätzlich mit wenigstens einem leitfähigkeitsverbessernden Additiv b3) ausgerüstet werden. Bevorzugt ist das leitfähigkeitsverbessernde Additiv b3) ausgewählt ausgewählt unter Metallpartikeln, Ruß, Graphit, Graphen, Kohlenstoffnanoröhren (CNT), Kohlenstoffnanofasern und Mischungen davon. Bevorzugt umfasst das leitfähigkeitsverbessernde Additiv b3) Ruß oder besteht aus Ruß. Die Ausrüstung des Fasermaterials a) mit wenigstens einem leitfähigkeitsverbessernden Additiv b3) kann beispielsweise gemeinsam mit dem Polymer b1) und/oder b2) und/oder weiteren Additiven erfolgen. Bevorzugt wird zur Ausrüstung des Fasermaterials a) eine wässrige Dispersion eingesetzt.

Bevorzugt beträgt der Massenanteil des leitfähigkeitsverbessernden Additivs b3) 0,5 bis 45 %, bevorzugt 1 bis 25 %, bezogen auf die Masse des Fasermaterials a). In einer speziellen Ausführungsform umfasst das leitfähigkeitsverbessernde Additiv b3) Ruß oder besteht aus Ruß und beträgt der Massenanteil 0,5 bis 45 %, bevorzugt 1 bis 25 %, bezogen auf die Masse des Fasermaterials a).

Bevorzugt beträgt das Gesamtgewicht der Komponenten b1), b2) und b3) 3 bis 50 Gew.- %, bevorzugt 5 bis 35 Gew.-%, bezogen auf das Gesamtgewicht des (nicht ausgerüsteten) Fasermaterial a).

Bevorzugt enthält das Fasermaterial a) darauf aufgebracht und/oder darin eingebracht

- 10 bis 50 Gew.-% wenigstens eines fluorhaltigen Polymers b1),

- 5 bis 40 Gew.-% wenigstens eines von b1) verschiedenen Polymers b2) und

- 20 bis 80 Gew.-% wenigstens eines leitfähigkeitsverbessernden Additivs b3),

bezogen auf das Gesamtgewicht der Komponenten b1), b2) und b3).

Die Fasermaterialen a) können zusätzlich wenigstens ein weiteres Additiv b4) enthalten. Dazu zählen z.B. von den Komponenten b1) und b2) verschiedene polymere Bindemittel b41), oberflächenaktive Substanzen b42), etc. Geeignete Bindemittel b41) sind z. B. Furan-, Polyimidharze, etc. Die Ausrüstung des Fasermaterials a) mit wenigstens einem weiteren Additiv b4) kann gemeinsam mit dem Polymer b1) und/oder b2) und/oder weiteren Additiven erfolgen. Die Bindemittel b41) können gegebenenfalls anschließend gehärtet werden. Dies kann z.B. gemeinsam mit dem Trocknen und/oder Sintern im Anschluß an die Ausrüstung mit den Polymeren b1) und b2) oder auch separat davon erfolgen.

Bevorzugt beträgt der Gesamtmassenanteil an weiteren Additiven b4) 0 bis 80 %, bevorzugt 0 bis 50 %, bezogen auf die Masse des Fasermaterials a). Sofern die Fasermaterialien a) zusätzlich wenigstens ein weiteres Additiv b4) enthalten, beträgt der Gesamtmassenanteil an weiteren Additiven b4) 0,1 bis 80 %, bevozugt 0,5 bis 50 %, bezogen auf die Masse des Fasermaterials a).

Speziell enthält das Fasermaterial a) von den fluorhaltigen Polymeren b1) und den Polymeren b2) verschiedene weitere Polymere b41) in einem Gewichtsanteil von höchstens 5 %, bevorzugt von höchstens 1 %, besonders bevorzugt von höchstens 0,5 %, insbesondere von höchstens 0,1 %, bezogen auf das Gesamtgewicht des Fasermaterials a), darauf aufgebracht und/oder darin eingebracht. Noch spezieller enthält das Fasermaterial a) keine Zusätze von weiteren Polymeren b41), die von den fluorhaltigen Polymeren b1) und den Polymeren b2) verschieden sind.

Das Fasermaterial a) weist vorzugsweise eine Dicke im Bereich von 50 bis 500 $\mu$m, besonders bevorzugt von 100 bis 400 $\mu$m auf. Diese Dicke bezieht sich auf den nicht ausgerüsteten, unkomprimierten Zustand des Fasermaterials a), d. h. vor dem Einbau der GDL in eine Brennstoffzelle.

Das Fasermaterial a) kann durch übliche Verfahren mit den Komponenten b1), b2) und gegebenenfalls b3) und/oder b4) ausgerüstet werden. Geeignete Beschichtungs- und Imprägnierverfahren werden im Folgenden näher beschrieben.

In einer speziellen Ausführungsform wird das mit den Komponenten b1), b2) und gegebenenfalls b3) und/oder b4) ausgerüstete Fasermaterial a) einer thermischen Behandlung (Sinterung) unterzogen.

Eine bevorzugte Ausführungsform ist eine Gasdiffusionslage, die ein durch thermische Behandlung bei einer Temperatur von wenigstens 250 °C, bevorzugt von wenigstens 300 °C, insbesondere in einem Bereich von 300 bis 450 °C, speziell von 350 bis 450 °C erhaltenes Sinterungsprodukt von A) umfasst.

In einer bevorzugten Ausführungsform besteht die erfindungsgemäße Gasdiffusionslage aus einem zweilagigen Schichtverbund auf Basis eines flächigen, elektrisch leitfähigen Materials A) oder eines Sinterungsprodukts davon und einer mikroporösen Lage (MPL) B) auf einer der Flächen des Fasermaterials A).

Im Gegensatz zum makroporösen Fasermaterial A) ist die MPL mikroporös mit Porendurchmessern, die in der Regel deutlich unter einem Mikrometer liegen, bevorzugt von höchstens 900 nm, besonders bevorzugt von höchstens 500 nm, insbesondere von höchstens 300 nm. Der mittlere Porendurchmesser der MPL B) liegt vorzugsweise in einem Bereich von 5 bis 200 nm, besonders bevorzugt von 10 bis 100 nm. Die Bestimmung des mittleren Porendurchmessers kann wiederum durch Quecksilber-Porosimetrie erfolgen. Die MPL enthält leitfähige Kohlenstoffpartikel, vorzugsweise Ruß oder Graphit, in einer Matrix aus einem polymeren Binder. Bevorzugte Binder sind die zuvor genannten fluorhaltigen Polymere, speziell Polytetrafluorethylen (PTFE).

Die mikroporöse Lage b) weist vorzugsweise eine Dicke im Bereich von 10 bis 100 $\mu$m, besonders bevorzugt von 20 bis 50 $\mu$m auf. Diese Dicke bezieht sich auf den unkomprimierten Zustand der mikroporösen Lage B), d. h. vor dem Einbau der GDL in eine Brennstoffzelle.

Die erfindungsgemäße Gasdiffusionslage weist vorzugsweise eine Dicke (Gesamtdicke aus Fasermaterial A) und MPL B)) im Bereich von 80 bis 1000 $\mu$m, besonders bevorzugt von 100 bis 500 $\mu$m auf. Diese Dicke bezieht sich auf den unkomprimierten Zustand der GDL, d. h. vor ihrem Einbau in eine Brennstoffzelle.

Herstellungsverfahren

In Schritt i) des erfindungsgemäßen Verfahrens wird wenigstens ein Fasermaterial bereitstellt, ausgewählt unter Kohlefaser-Vliesstoffen, Kohlefaser-Geweben und Mischungen davon. Bezüglich geeigneter und bevorzugter Fasermaterialien wird auf die zuvor gemachten Ausführungen in vollem Umfang Bezug genommen.

Das in Schritt i) bereitgestellte Fasermaterial wird in Schritt ii) mit einer wässrigen Zusammensetzung beschichtet und/oder imprägniert, die wenigstens ein fluorhaltiges Polymer b1) und wenigstens ein von b2) verschiedenes Polymer, ausgewählt ist aus Polyaryletherketonen, Polyphenylensulfiden, Polysulfonen, Polyethersulfonen, teilaromatischen (Co)polyamiden, Polyimiden, Polyamidimiden, Polyetherimiden und Mischungen davon, enthält.

Bezüglich geeigneter und bevorzugter Polymere b1) und b2) wird auf die zuvor gemachten Ausführungen in vollem Umfang Bezug genommen.

Die Ausrüstung der Fasermaterialien durch Beschichten und/oder Imprägnieren erfolgt nach üblichen, dem Fachmann bekannten Aufbringmethoden. Vorzugsweise wird zum Beschichten und/oder Imprägnieren der Fasermaterialien ein Verfahren eingesetzt, das ausgewählt ist unter Foulardieren, Rakeln, Sprühen, Pflatschen und Kombinationen davon.

Beim Foulardverfahren wird das Fasermaterial durch ein Foulard (Tauchbecken) mit der Additiv-haltigen Lösung oder Dispersion geführt und anschließend über ein druck- und ggf. spalteinstellbares Walzenpaar auf die gewünschte Auftragsmenge an Additiv abgequetscht.

Beim Rakelverfahren wird zwischen Tiefdruck und Siebdruck unterschieden. Beim Tiefdruck wird als Rakel beispielsweise ein messerartig geschliffenes Stahlband mit oder ohne Stützrakel eingesetzt. Sie dient dazu, die überschüssige Additiv-haltige Lösung oder Dispersion von den Stegen des Druckzylinders abzustreifen (Abrakeln). Beim Siebdruck besteht die Rakel hingegen in der Regel aus Gummi oder Kunststoff mit einer scharf- oder rundgeschliffenen Kante.

Beim Sprühauftrag wird die Additiv-haltige Lösung oder Dispersion mittels einer Schlitzdüse auf das auszurüstende Fasermaterial aufgetragen.

Das Pflatschverfahren (Kiss-Roll) dient zur Beschichtung der Materialunterseite horizontal verlaufender Bahnen . Das Beschich-tungsmedium kann gegenläufig oder mitläufig auf die Warenbahn aufgebracht werden. Mittels Übertragungswalzen kann eine indirekte Beschichtung mit geringen Auftrags-mengen realisiert werden.

In einer besonderen Ausführungsform wird das Foulardverfahren zum Ausrüsten der erfindungsgemäßen Reinigungsartikel verwendet.

In Schritt iii) des erfindungsgemäßen Verfahrens wird das beschichte und/oder imprägnierte Fasermaterial einer Trocknung und/oder Sinterung unterzogen. Geeignete Verfahren zur Trocknung von mit Additiv-haltigen Lösungen oder Dispersionen beschichteten und/oder imprägnierten Vliesstoffen oder Geweben sind prinzipiell bekannt. Nach dem Auftragen kann beispielsweise wenigstens ein Teil des Lösungsmittels, speziell des Wassers, aus dem Fasermaterial abgesaugt werden, indem dieses z.B. über eine Absaugöffnung geführt wird, von der die Flüssigkeit mittels anliegendem Unterdruck abgeführt wird. Alternativ oder zusätzlich kann das Fasermaterial bei erhöhter Temperatur getrocknet werden. Zusätzlich kann die Trocknung bei einem verringerten Druck erfolgen.

Bevorzugt erfolgt die Trocknung des Fasermaterials bei einer Temperatur im Bereich von 20 bis 250 °C, besonders bevorzugt 40 bis 200 °C.

Zusätzlich oder alternativ zur Trocknung kann das beschichte und/oder imprägnierte Fasermaterial in Schritt iii) einer Sinterung unterzogen werden. Die Sinterung erfolgt vorzugsweise durch thermische Behandlung bei einer Temperatur von wenigstens 250 °C, bevorzugt von wenigstens 300 °C, insbesondere in einem Bereich von 300 bis 450 °C, speziell von 350 bis 450 °C.

Abschließend kann das ausgerüstete und getrocknete und/oder gesinterte Fasermaterial im Schritt iv) mit einer mikroporösen Lage beschichtet werden. Bezüglich geeigneter und bevorzugter Ausführungen der mikroporösen Lage wird auf die zuvor gemachten Ausführungen in vollem Umfang Bezug genommen.

Brennstoffzelle

Ein weiterer Gegenstand der Erfindung ist eine Brennstoffzelle, umfassend wenigstens eine Gasdiffusionslage, wie zuvor definiert, oder erhältlich durch ein Verfahren, wie zuvor definiert.

Prinzipiell eignet sich die erfindungsgemäße Gasdiffusionslage für alle üblichen Brennstoffzelltypen, speziell Niedertemperatur-Protonenaustauschmembran-Brennstoffzellen (PEMFC). Auf die zuvor gemachten Ausführungen zum Aufbau von Brennstoffzellen wird in vollem Umfang Bezug genommen.

Es ist ein Vorteil der Erfindung, dass die Gasdiffusionslage gezielt an die baulichen Gegebenheiten der Brennstoffzelle, der durch diese strömenden Betriebsmedien und/oder die Betriebsparameter der Brennstoffzelle angepasst werden kann.

Die Erfindung wird anhand der folgenden, nicht einschränkend zu verstehenden Beispiele erläutert.

FIGURENBESCHREIBUNG

Figur 1 zeigt für drei erfindungsgemäße GDL und für 7 Vergleichs-GDL, wie im folgenden genauer angegeben, jeweils die Biegesteifigkeit und die maximale Durchbiegung bis zum Bruch bzw. bis zum Abgleiten der Probekörper von den Stützstellen.

Figur 2 zeigt für die drei erfindungsgemäßen GDL und für die 7 Vergleichs-GDL jeweils die Biegesteifigkeit und die maximalen Biegewinkel.

Figur 3 zeigt für die drei erfindungsgemäßen GDL und für die 7 Vergleichs-GDL jeweils den Biegemodul und die maximale Durchbiegung bis zum Bruch bzw. bis zum Abgleiten der Probekörper von den Stützstellen.

Figur 4 zeigt für drei erfindungsgemäße GDL und für 7 Vergleichs-GDL jeweils den Biegemodul und die maximale Durchbiegung bis zum Bruch bzw. bis zum Abgleiten der Probekörper von den Stützstellen.

BEISPIELE

Die Bestimmung der Biegeeigenschaften erfolgte nach DIN EN ISO 178:2019-08. Wie im Folgenden beschrieben, wurden flächige elektrisch leitfähige Materialien gemäß der Erfindung und als Vergleich hergestellt. Ein Teil der Materialien wurde zusätzlich mit einer mikroporösen Lage (MPL) versehen. Aus diesen Materialien wurden Prüfkörper mit einer Prüfkörperbreite von 50 mm und einer Prüfkörperlänge von 100 mm entnommen.

Die Biegebeanspruchung erfolgte im Dreipunktbiegeversuch mit einer Stützweite von 32 mm und einer Prüfgeschwindigkeit von anfangs 2 mm/min und später 50 mm/min bis zum Erreichen des Bruchs oder bis zum Abgleiten des Prüfkörpers von den Stützstellen. Die Ermittlung der Biegesteifigkeit [N/mm] und des Biegemoduls E [N/mm$^2$] erfolgte aus der Messung der Mittendurchbiegung.

Aus der maximalen Durchbiegung sowie dem halben Abstand der beiden Stützstellen wurde der maximale Biegewinkel $\alpha$ berechnet:

$$\alpha = \text{arctan (max. Durchbiegung / halbe Stützweite)}$$

I) Herstellung von Gasdiffusionlagen

**Herstellungsbeispiel 1**

Zur Herstellung eines flächigen elektrisch leitfähigen Materials wurde ein Vliesstoff aus 100% Kohlenstofffasern mit einer Flächenmasse von 63 g/m$^2$ eingesetzt. Zur Ausrüstung des Vliesstoffs wurde eine Imprägnierzusammensetzung gemischt, die bezogen auf den Feststoff 60% Ruß, 22% PTFE und 18% PEEK enthielt. Die Ausrüstung erfolgte durch Foulard-Imprägnierung mit einer wässrigen Dispersion mit 15% Ausrüstungsgewicht bezogen auf die Masse des GDL-Substrat (entsprechend 9,5 g/m$^2$). Anschließend erfolgte noch eine Trocknung für 5 Minuten bei 160 °C und eine Sinterung für 10 Minuten bei 400 °C. Auf das so erhaltene versteifte Substrat wurde dann zur Herstellung der erfindungsgemäßen Materialien 2) und 3) vor der Bestimmung der anwendungstechnischen Eigenschaften noch eine MPL aufgebracht.

**Herstellungsbeispiel 2**

Zur Herstellung eines flächigen elektrisch leitfähigen Materials wurde ein Vliesstoff aus 100% Kohlenstofffasern mit einer Flächenmasse von 40 g/m$^2$ eingesetzt. Zur Ausrüstung des Vliesstoffs wurde eine Imprägnierzusammensetzung gemischt, die bezogen auf den Feststoff 40% Ruß, 20% PTFE und 40% PPS (Fortron®0205B4 der Fa. Celanese) enthielt. Die Ausrüstung erfolgte durch Foulard-Imprägnierung mit einer wässrigen Dispersion mit 15% Ausrüstungsgewicht bezogen auf die Masse des GDL-Substrat (entsprechend 6,0 g/m$^2$). Anschließend erfolgte noch eine Trocknung für 5 Minuten bei 150 °C und eine Sinterung für 10 Minuten bei 400 °C.

II) Messung der Biegeeigenschaften:

Folgende Materialien wurden zur Bestimmung der anwendungstechnischen Eigenschaften eingesetzt:

1) erfindungsgemäße GDL aus Herstellungsbeispiel 1 ohne MPL

2) erfindungsgemäße GDL analog zu Herstellungsbeispiel 1 mit MPL,
Für die MPL-Beschichtung wurde auf das Fasermaterial eine MPL-Paste aufgetragen, die 2 Gew.-% FEP (Tetrafluorethylen-Hexafluorpropylen-Copolymer) und 7,8 Gew.-% Kohlenstoff in destilliertem Wasser enthielt. Anschließend wurde das Fasermaterial bei 160 °C getrocknet und bei 400 °C gesintert. Die resultierende MPL-Beladung betrug 21 g/m$^2$.

3) erfindungsgemäße GDL aus Herstellungsbeispiel 1 mit MPL,
Für die MPL-Beschichtung wurde auf das Fasermaterial eine MPL-Paste aufgetragen, die 2,7 Gew.-% PTFE und 10,8 Gew.-% Kohlenstoff in destilliertem Wasser enthielt. Anschließend wurde das Fasermaterial bei 160 °C getrocknet und bei 400 °C gesintert. Die resultierende MPL-Beladung betrug 15 g/m$^2$.

V4) Vergleich: Vliesstoff aus 100% Kohlenstofffasern mit einem Flächengewicht von 63 g/m$^2$ gemäß Herstellungs-beispiel 1 ohne Imprägnierung

V5) Vergleich: Vliesstoff aus 100% Kohlenstofffasern mit einem Flächengewicht von 63 g/m$^2$ gemäß Herstellungs-beispiel 1 mit PTFE/Ruß-Imprägnierung ohne Polymerversteifung

V6) Vergleich: Kohlefaser-Papier-GDL mit MPL-Beschichtung

Gesamtdicke 120 μm, Flächengewicht 103 g/m$^2$
CeTech GDL 120 (CeTech Co. Ltd., Taiwan)

V7) Vergleich: Kohlefaser-Papier-GDL ohne PTFE-Imprägnierung und ohne MPL-Beschichtung, kein rollbares Produkt sondern Blattware, Gesamtdicke 120 μm, Toray TGP-H030 (Toray Industries Inc., Japan)

V8) Vergleich: Kohlefaser-Papier-GDL mit MPL-Beschichtung und mit PTFE-Imprägnierung, kein rollbares Produkt sondern Blattware

Gesamtdicke 220 μm, Flächengewicht von 91 g/m$^2$
SGL 29BC (SGL Carbon SE, Deutschland)

V9) Vergleich: Kohlefaser-Papier-GDL mit MPL-Beschichtung und mit PTFE-Imprägnierung, kein rollbares Produkt sondern Blattware

Gesamtdicke 215 μm, Flächengewicht: 74 g/m$^2$
SGL 22BB (SGL Carbon SE, Deutschland)

V10) Vergleich: Kohlefaser-Papier-GDL mit MPL-Beschichtung und mit PTFE-Imprägnierung, kein rollbares Produkt sondern Blattware

Gesamtdicke 190 μm, Flächengewicht: 56 g/m$^2$
AVCarb MB030 (AvCarb Material Solutions, USA)

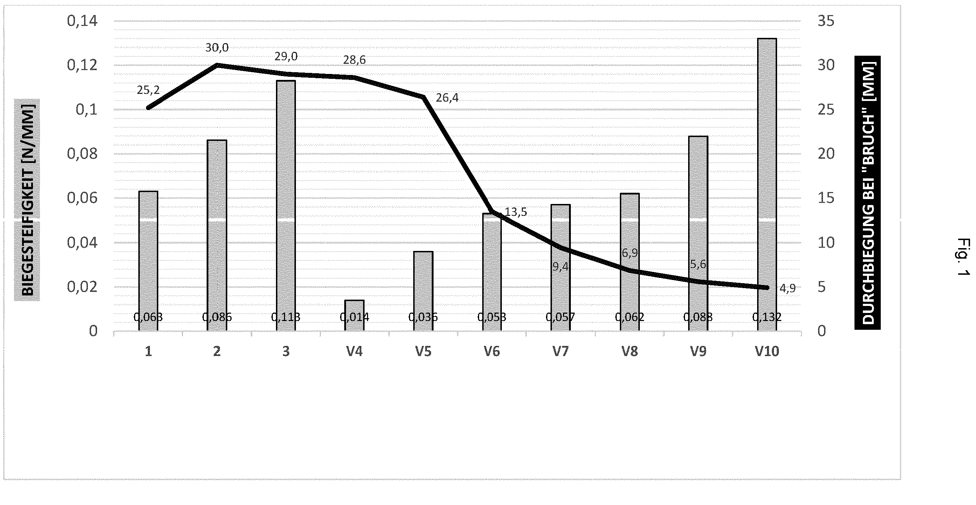

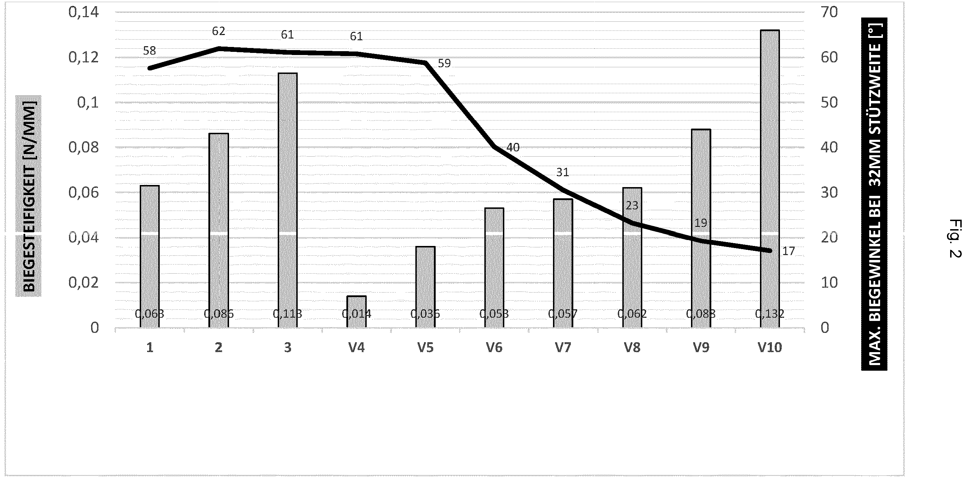

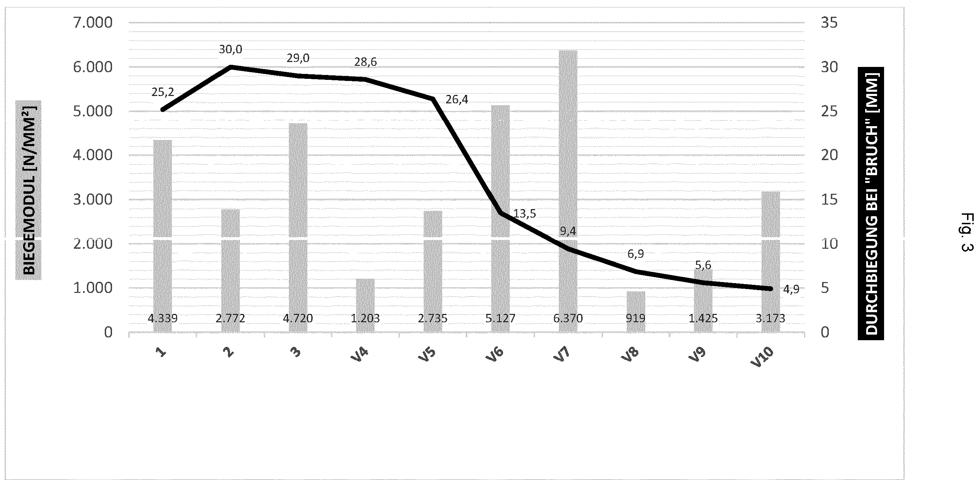

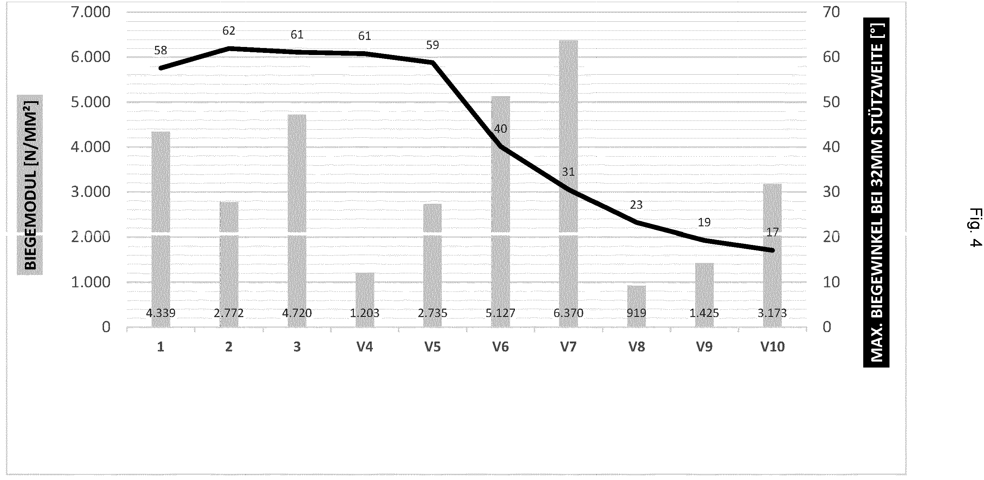

Die Ergebnisse der anwendungstechnischen Messungen sind in den Figuren 1 bis 4 dargestellt. Es wird gezeigt, dass die erfindungsgemäß ausgerüsteten Gasdiffusionslagen eine optimale Eigenschaftskombination von hoher Biegesteifigkeit und hoher Biegsamkeit aufweisen. So ergibt sich die maximale Durchbiegung bei den erfindungsgemäßen GDL nicht durch das Brechen der Materialien sondern durch das Abgleiten der Enden von den Stützstellen. Sie weisen zumindest vergleichbare und oftmals höhere Biegesteifigkeiten und Biegemodule als die aus dem Stand der Technik bekannten Kohlefaser-Papiere. Vliesstoffe ganz ohne Ausrüstung oder GDL ohne zusätzliche Polymerversteifung, gezeigt am Beispiel von Polyetherketonen und Polyphenylensulfiden, weisen niedrige Biegesteifigkeiten auf. Speziell das nicht vorhandene "Sprödbruchverhaltens" und der deutlich größere maximalen Biegewinkel bilden eine besonders vorteilhafte Eigenschaftskombination.

## Patentansprüche

1.  Gasdiffusionslage für eine Brennstoffzelle, die

    A) ein flächiges elektrisch leitfähiges Material, umfassend

        a) wenigstens ein Fasermaterial, ausgewählt unter Kohlefaser-Vliesstoffen, Kohlefaser-Geweben und Mischungen davon,
        wobei das Fasermaterial

b1) wenigstens ein fluorhaltiges Polymer, und

b2) wenigstens ein von b1) verschiedenes Polymer, ausgewählt unter Polyaryletherketonen, Polyphenylensulfiden, Polysulfonen, Polyethersulfonen, teilaromatischen (Co)polyamiden, Polyimiden, Polyamidimiden, Polyetherimiden und Mischungen davon,

darauf aufgebracht und/oder darin eingebracht enthält,

und

B) gegebenenfalls eine mikroporöse Lage auf einer der Flächen des elektrisch leitfähiges Materials A)

umfasst.

2. Gasdiffusionslage nach Anspruch 1, wobei das flächige elektrisch leitfähige Material A) erhältlich ist durch Beschichten und/oder Imprägnieren wenigstens eines Fasermaterials a), ausgewählt unter Kohlefaser-Vliesstoffen, Kohlefaser-Geweben und Mischungen davon, mit einer wässrigen Zusammensetzung, enthaltend wenigstens ein fluorhaltiges Polymer b1), und wenigstens ein von b1) verschiedenes Polymer b2), ausgewählt unter Polyaryletherketonen, Polyphenylensulfiden, Polysulfonen, Polyethersulfonen, teilaromatischen (Co)polyamiden, Polyimiden, Polyamidimiden, Polyetherimiden und Mischungen davon, und anschließendes Trocknen und/oder Sintern des behandelten Fasermaterials, wobei die Sinterung durch thermische Behandlung bei einer Temperatur in einem Bereich von 300 bis 450°C erfolgt.

3. Gasdiffusionslage nach Anspruch 1 oder 2, wobei das Fasermaterial a)

- wenigstens ein fluorhaltiges Polymer b1),
- wenigstens ein von b1) verschiedenes Polymer b2), ausgewählt unter Polyaryletherketonen, Polyphenylensulfiden, Polysulfonen, Polyethersulfonen, teilaromatischen (Co)polyamiden, Polyimiden, Polyamidimiden, Polyetherimiden und Mischungen davon,
- gegebenenfalls wenigstens ein leitfähigkeitsverbesserndes Additiv b3),
- gegebenenfalls wenigstens ein weiteres Additiv b4), das ausgewählt ist unter

  - von b1) und b2) verschiedenen polymeren Bindemitteln b41),
  - oberflächenaktiven Substanzen b42),
  - weiteren Zusatz- und Hilfsstoffen b43),

darauf aufgebracht und/oder darin eingebracht enthält.

4. Gasdiffusionslage nach einem der vorhergehenden Ansprüche, wobei das fluorhaltige Polymer b1) ausgewählt ist unter Polytetrafluorethylen, Tetrafluorethylen-Hexafluorpropylen-Copolymeren, Perfluoralkoxy-Polymeren und Mischungen davon.

5. Gasdiffusionslage nach einem der vorhergehenden Ansprüche, wobei das Polymer b2) ausgewählt ist unter Polyaryletherketonen, Polyphenylensulfiden, Polysulfonen, Polyethersulfonen und Mischungen davon.

6. Gasdiffusionslage nach einem der vorhergehenden Ansprüche, wobei das Fasermaterial a) zusätzlich b3) wenigstens ein leitfähigkeitsverbesserndes Additiv, ausgewählt unter Metallpartikeln, Ruß, Graphit, Graphen, Kohlenstoffnanoröhren (CNT), Kohlenstoffnanofasern und Mischungen davon, darauf aufgebracht und/oder darin eingebracht enthält.

7. Gasdiffusionslage nach Anspruch 6, wobei das Fasermaterial a), bezogen auf das Gesamtgewicht der Komponenten b1), b2) und b3)

- 10 bis 50 Gew.-% wenigstens eines fluorhaltigen Polymers b1),
- 5 bis 40 Gew.-% wenigstens eines von b1) verschiedenen Polymers b2) und
- 20 bis 80 Gew.-% wenigstens eines leitfähigkeitsverbessernden Additivs b3),

darauf aufgebracht und/oder darin eingebracht enthält.

8. Gasdiffusionslage nach Anspruch 6 oder 7, wobei das Gesamtgewicht der Komponenten b1), b2) und b3) 3 bis 50 Gew.-%, bevorzugt 5 bis 35 Gew.-%, bezogen auf das Gesamtgewicht des Fasermaterials a), beträgt.

9. Gasdiffusionslage nach einem der vorhergehenden Ansprüche, wobei das Fasermaterial a) von den fluorhaltigen Polymeren b1) und den Polymeren b2) verschiedene weitere Polymere b41) in einem Gewichtsanteil von höchstens 5 %, bevorzugt von höchstens 1 %, besonders bevorzugt von höchstens 0,5 %, insbesondere von höchstens 0,1 %, bezogen auf das Gesamtgewicht des Fasermaterials a), darauf aufgebracht und/oder darin eingebracht enthält.

10. Gasdiffusionslage nach einem der vorhergehenden Ansprüche, die ein durch thermische Behandlung bei einer Temperatur in einem Bereich von 300 bis 450°C erhaltenes Sinterungsprodukt von A) umfasst.

11. Verfahren zur Herstellung einer Gasdiffusionslage für eine Brennstoffzelle, umfassend ein flächiges elektrisch leitfähiges Material A) bei dem man

i) wenigstens ein Fasermaterial bereitstellt, ausgewählt unter Kohlefaser-Vliesstoffen, Kohlefaser-Geweben und Mischungen davon,
ii) das in Schritt i) bereitgestellte Fasermaterial mit einer Zusammensetzung beschichtet und/oder imprägniert, die wenigstens ein fluorhaltiges Polymer b1), und wenigstens ein von b1) verschiedenes Polymer b2), ausgewählt unter Polyaryletherketonen, Polyphenylensulfiden, Polysulfonen, Polyethersulfonen, teilaromatischen (Co)polyamiden, Polyimiden, Polyamidimiden, Polyetherimiden und Mischungen davon, enthält,
iii) das beschichte und/oder imprägnierte Fasermaterial einer Trocknung und/oder Sinterung unterzieht, wobei die Sinterung durch thermische Behandlung bei einer Temperatur in einem Bereich von 300 bis 450°C erfolgt, und
iv) gegebenenfalls das thermisch behandelte Fasermaterial mit einer mikroporösen Lage beschichtet.

12. Brennstoffzelle, umfassend wenigstens eine Gasdiffusionslage, wie in einem der Ansprüche 1 bis 10 definiert, oder erhältlich durch ein Verfahren, wie in Anspruch 11 definiert.

13. Verwendung eines flächigen elektrisch leitfähigen Materials A), umfassend

a) wenigstens ein Fasermaterial, ausgewählt unter Kohlefaser-Vliesstoffen, Kohlefaser-Geweben und Mischungen davon,

wobei das Fasermaterial

b1) wenigstens ein fluorhaltiges Polymer, und
b2) wenigstens ein von b1) verschiedenes Polymer, ausgewählt unter Polyetherketonen, Polyphenylensulfiden, Polysulfonen, Polyethersulfonen, teilaromatischen (Co)polyamiden, Polyimiden, Polyamidimiden, Polyetherimiden und Mischungen davon,

darauf aufgebracht und/oder darin eingebracht enthält,
als eine oder in einer Gasdiffusionslage für eine Brennstoffzelle.

14. Verwendung nach Anspruch 13, wobei das flächige elektrisch leitfähige Material A) wenigstens eine der folgenden Eigenschaften aufweist:

- eine Biegesteifigkeit, bestimmt durch Mittenbeanspruchung in einem 3-Punkt-Biegeversuch nach DIN EN ISO 178:2019-08 an einem rechteckigen Prüfkörper von 50 mm Breite, 0,13 mm Dicke und 100 mm Länge bei einer Stützweite von 32 mm und einer Prüfgeschwindigkeit von 2 mm/min von 0,05 bis 0,08 N/mm,
- einen maximalen Biegewinkel $\alpha$, bestimmt durch Mittenbeanspruchung in einem 3-Punkt-Biegeversuch nach DIN EN ISO 178:2019-08 an einem rechteckigen Prüfkörper von 50 mm Breite, 0,13 mm Dicke und 100 mm Länge bei einer Stützweite von 32 mm und einer Prüfgeschwindigkeit von 2 mm/min von 50 bis 60°,
- ein Biegemodul, bestimmt durch Mittenbeanspruchung in einem 3-Punkt-Biegeversuch nach DIN EN ISO 178:2019-08 an einem rechteckigen Prüfkörper von 50 mm Breite, 0,13 mm Dicke und 100 mm Länge bei einer Stützweite von 32 mm und einer Prüfgeschwindigkeit von 2 mm/min von 3000 bis 6000 N/mm$^2$.

**Claims**

1. Gas-diffusion layer for a fuel cell, said layer comprising

A) a planar, electrically conductive material comprising

a) at least one fibre material selected from carbon fibre nonwovens, carbon fibre fabrics and blends thereof,

wherein the fibre material comprises

b1) at least one fluorine-containing polymer, and
b2) at least one polymer different from b1), selected from polyaryl ether ketones, polyphenylene sulfides, polysulfones, polyether sulfones, partially aromatic (co)polyamides, polyimides, polyamideimides, polyetherimides and blends thereof,

applied thereto and/or incorporated therein,

and

B) optionally a microporous layer on one of the surfaces of the electrically conductive material A).

2. Gas-diffusion layer according to Claim 1, wherein the planar, electrically conductive material A) is obtainable by coating and/or impregnating at least one fibre material a), selected from carbon fibre nonwovens, carbon fibre fabrics and blends thereof, with an aqueous composition comprising at least one fluorine-containing polymer b1) and at least one polymer b2) different from b1) that is selected from polyaryl ether ketones, polyphenylene sulfides, polysulfones, polyether sulfones, partially aromatic (co)polyamides, polyimides, polyamideimides, polyetherimides and blends thereof, and subsequent drying and/or sintering of the treated fibre material, wherein the sintering is carried out by thermal treatment at a temperature within a range from 300 to 450°C.

3. Gas-diffusion layer according to Claim 1 or 2, wherein the fibre material a) comprises

- at least one fluorine-containing polymer b1),
- at least one polymer b2) different from b1), selected from polyaryl ether ketones, polyphenylene sulfides, polysulfones, polyether sulfones, partially aromatic (co)polyamides, polyimides, polyamideimides, polyetherimides and blends thereof,
- optionally at least one conductivity-improving additive b3),
- optionally at least one further additive b4) that is selected from
- polymeric binders b41) different from b1) and b2),
- surface-active substances b42),
- further additives and auxiliaries b43),

applied thereto and/or incorporated therein.

4. Gas-diffusion layer according to any of the preceding claims, wherein the fluorine-containing polymer b1) is selected from polytetrafluoroethylene, tetrafluoroethylene-hexafluoropropylene copolymers, perfluoroalkoxy polymers and blends thereof.

5. Gas-diffusion layer according to any of the preceding claims, wherein the polymer b2) is selected from polyaryl ether ketones, polyphenylene sulfides, polysulfones, polyether sulfones and blends thereof.

6. Gas-diffusion layer according to any of the preceding claims, wherein the fibre material a) additionally comprises b3) at least one conductivity-improving additive selected from metal particles, carbon black, graphite, graphene, carbon nanotubes (CNT), carbon nanofibres and mixtures thereof, applied thereto and/or incorporated therein.

7. Gas-diffusion layer according to Claim 6, wherein the fibre material a), based on the total weight of components b1), b2) and b3), comprises

- 10% to 50% by weight of at least one fluorine-containing polymer b1),
- 5% to 40% by weight of at least one polymer b2) different from b1), and
- 20% to 80% by weight of at least one conductivity-improving additive b3),

applied thereto and/or incorporated therein.

8. Gas-diffusion layer according to Claim 6 or 7, wherein the total weight of components b1), b2) and b3) is 3% to 50% by weight, preferably 5% to 35% by weight, based on the total weight of the fibre material a).

9. Gas-diffusion layer according to any of the preceding claims, wherein the fibre material a) comprises further polymers b41) different from the fluorine-containing polymers b1) and the polymers b2) in a proportion by weight of not more than 5%, preferably not more than 1%, more preferably not more than 0.5%, in particular not more than 0.1%, based on the total weight of the fibre material a), these being applied thereto and/or incorporated therein.

10. Gas-diffusion layer according to any of the preceding claims, which comprises a sintering product of A) obtained by thermal treatment at a temperature within a range from 300 to 450°C.

11. Process for producing a gas-diffusion layer for a fuel cell, said layer comprising a planar, electrically conductive material A) in which

i) at least one fibre material selected from carbon fibre nonwovens, carbon fibre fabrics and blends thereof is provided,
ii) the fibre material provided in step i) is coated and/or impregnated with a composition that comprises at least one fluorine-containing polymer b1) and at least one polymer b2) different from b1), selected from polyaryl ether ketones, polyphenylene sulfides, polysulfones, polyether sulfones, partially aromatic (co)polyamides, polyimides, polyamideimides, polyetherimides and blends thereof,
(iii) the coated and/or impregnated fibre material is subjected to drying and/or sintering, wherein the sintering is carried out by thermal treatment at a temperature within a range from 300 to 450°C, and
iv) optionally the thermally treated fibre material is coated with a microporous layer.

12. Fuel cell comprising at least one gas-diffusion layer as defined in any of Claims 1 to 10 or obtainable by a process as defined in Claim 11.

13. Use of a planar, electrically conductive material A) comprising

a) at least one fibre material selected from carbon fibre nonwovens, carbon fibre fabrics and blends thereof, wherein the fibre material comprises

b1) at least one fluorine-containing polymer, and
b2) at least one polymer different from b1), selected from polyetherketones, polyphenylene sulfides, polysulfones, polyethersulfones, partially aromatic (co)polyamides, polyimides, polyamideimides, polyetherimides and blends thereof,
applied thereto and/or incorporated therein,
as or in a gas-diffusion layer for a fuel cell.

14. Use according to Claim 13, wherein the planar, electrically conductive material A) has at least one of the following properties:

- a bending stiffness, determined by centre loading in a 3-point bending test according to DIN EN ISO 178:2019-08 on a rectangular test specimen 50 mm wide, 0.13 mm thick and 100 mm in length with a span of 32 mm and a test speed of 2 mm/min, of 0.05 to 0.08 N/mm,
- a maximum bending angle $\alpha$, determined by centre loading in a 3-point bending test according to DIN EN ISO 178:2019-08 on a rectangular test specimen 50 mm wide, 0.13 mm thick and 100 mm in length with a span of 32 mm and a test speed of 2 mm/min, of 50 to 60°,
- a flexural modulus, determined by centre loading in a 3-point bending test according to DIN EN ISO 178:2019-08 on a rectangular test specimen 50 mm wide, 0.13 mm thick and 100 mm in length with a span of 32 mm and a test speed of 2 mm/min, of 3000 to 6000 N/mm$^2$.

**Revendications**

1. Couche de diffusion de gaz pour une pile à combustible, qui comprend

A) un matériau plat électriquement conducteur, comprenant

a) au moins un matériau fibreux choisi parmi les non-tissés en fibre de carbone, les tissus en fibre de carbone et leurs mélanges,

où le matériau fibreux contient

b1) au moins un polymère contenant du fluor, et

b2) au moins un polymère différent de b1), choisi parmi les polyaryléthercétones, les polysulfures de phénylène, les polysulfones, les polyéthersulfones, les (co)polyamides partiellement aromatiques, les polyimides, les polyamide-imides, les polyétherimides et leurs mélanges,

appliqués sur celui-ci et/ou incorporés dans celui-ci, et

B) éventuellement une couche microporeuse sur l'une des surfaces du matériau électriquement conducteur A).

2. Couche de diffusion de gaz selon la revendication 1, où le matériau plat électriquement conducteur A) peut être obtenu par revêtement et/ou imprégnation d'au moins un matériau fibreux a), choisi parmi les non-tissés en fibre de carbone, les tissus en fibre de carbone et leurs mélanges, avec une composition aqueuse contenant au moins un polymère contenant du fluor b1) et au moins un polymère b2) différent de b1), choisi parmi les polyaryléthercétones, les des polysulfures de phénylène, les polysulfones, les polyéthersulfones, les (co)polyamides partiellement aromatiques, les polyimides, les polyamide-imides, les polyétherimides et leurs mélanges, puis séchage et/ou frittage du matériau fibreux traité, le frittage étant effectué par traitement thermique à une température dans une plage de 300 à 450 °C.

3. Couche de diffusion de gaz selon la revendication 1 ou 2, où le matériau fibreux a) contient

- au moins un polymère contenant du fluor b1),
- au moins un polymère b2) différent de b1), choisi parmi les polyaryléthercétones, les polysulfures de phénylène, les polysulfones, les polyéthersulfones, les (co)polyamides partiellement aromatiques, les polyimides, les polyamide-imides, les polyétherimides et leurs mélanges,
- éventuellement au moins un additif améliorant la conductivité b3),
- éventuellement au moins un autre additif b4) choisi parmi
- les liants polymères b41) différents de b1) et b2),
- les substances tensioactives b42),
- d'autres additifs et adjuvants b43),

appliqués sur celui-ci et/ou incorporés dans celui-ci.

4. Couche de diffusion de gaz selon l'une quelconque des revendications précédentes, où le polymère contenant du fluor b1) est choisi parmi le polytétrafluoroéthylène, les copolymères de tétrafluoroéthylène-hexafluoropropylène, les polymères perfluoroalcoxy et leurs mélanges.

5. Couche de diffusion de gaz selon l'une quelconque des revendications précédentes, où le polymère b2) est choisi parmi les polyaryléthercétones, les polysulfures de phénylène, les polysulfones, les polyéthersulfones et leurs mélanges.

6. Couche de diffusion de gaz selon l'une quelconque des revendications précédentes, où le matériau fibreux a) contient en outre

b3) au moins un additif améliorant la conductivité, choisi parmi les particules métalliques, le noir de carbone, le graphite, le graphène, les nanotubes de carbone (CNT), les nanofibres de carbone et leurs mélanges, appliqué sur celui-ci et/ou incorporé dans celui-ci.

7. Couche de diffusion de gaz selon la revendication 6, où le matériau fibreux a), par rapport au poids total des composants b1), b2) et b3), contient

- 10 à 50 % en poids d'au moins un polymère contenant du fluor b1),
- 5 à 40 % en poids d'au moins un polymère b2) différent de b1) et
- 20 à 80 % en poids d'au moins un additif améliorant la conductivité b3),

appliqués sur celui-ci et/ou incorporés dans celui-ci.

8. Couche de diffusion de gaz selon la revendication 6 ou 7, où le poids total des composants b1), b2) et b3) représente 3 à 50 % en poids, de préférence 5 à 35 % en poids, par rapport au poids total du matériau fibreux a).

9. Couche de diffusion de gaz selon l'une quelconque des revendications précédentes, où le matériau fibreux a) contient, en plus des polymères contenant du fluor b1) et des polymères b2), d'autres polymères b41) dans une proportion en poids d'au plus 5 %, de préférence d'au plus 1 %, de manière particulièrement préférée d'au plus 0,5 %, notamment d'au plus 0,1 %, par rapport au poids total du matériau fibreux a), appliqués sur celui-ci et/ou incorporés dans celui-ci.

10. Couche de diffusion de gaz selon l'une quelconque des revendications précédentes, comprenant un produit fritté de A) obtenu par traitement thermique à une température dans une plage de 300 à 450 °C.

11. Procédé de fabrication d'une couche de diffusion de gaz pour une pile à combustible, comprenant un matériau électriquement conducteur plat A) selon lequel

   i) au moins un matériau fibreux est fourni, choisi parmi les non-tissés en fibre de carbone, les tissus en fibre de carbone et leurs mélanges,
   ii) le matériau fibreux fourni à l'étape i) est revêtu et/ou imprégné avec une composition comprenant au moins un polymère contenant du fluor b1) et au moins un polymère b2) différent de b1), choisi parmi les polyaryléthercétones, les polysulfures de phénylène, les polysulfones, les polyéthersulfones, les (co)polyamides partiellement aromatiques, les polyimides, les polyamide-imides, les polyétherimides et leurs mélanges,
   iii) le matériau fibreux revêtu et/ou imprégné est soumis à un séchage et/ou à un frittage, le frittage étant effectué par traitement thermique à une température dans une plage de 300 à 450 °C, et
   iv) le matériau fibreux traité thermiquement est éventuellement revêtu d'une couche microporeuse.

12. Pile à combustible, comprenant au moins une couche de diffusion de gaz, telle que définie dans l'une quelconque des revendications 1 à 10, ou pouvant être obtenue par un procédé tel que défini dans la revendication 11.

13. Utilisation s d'un matériau plat électriquement conducteur A), comprenant

   a) au moins un matériau fibreux choisi parmi les non-tissés en fibre de carbone, les tissus en fibre de carbone et leurs mélanges,

   où le matériau fibreux contient
   b1) au moins un polymère contenant du fluor, et
   b2) au moins un polymère différent de b1), choisi parmi les polyéthercétones, les polysulfures de phénylène, les polysulfones, les polyéthersulfones, les (co)polyamides partiellement aromatiques, les polyimides, les polyamide-imides, les polyétherimides et leurs mélanges, appliqués sur celui-ci et/ou incorporés dans celui-ci,
   en tant que ou dans une couche de diffusion de gaz pour une pile à combustible.

14. Utilisation selon la revendication 13, où le matériau plat électriquement conducteur A) présente au moins l'une des propriétés suivantes :

   - une rigidité à la flexion, déterminée par sollicitation en milieu de portée dans un essai de flexion en 3 points selon la norme DIN EN ISO 178:2019-08 sur une éprouvette rectangulaire de 50 mm de largeur, 0,13 mm d'épaisseur et 100 mm de longueur avec une portée d'appui de 32 mm et une vitesse d'essai de 2 mm/min, de 0,05 à 0,08 N/mm,
   - un angle de flexion maximal $\alpha$, déterminé par sollicitation en milieu de portée dans un essai de flexion en 3 points selon la norme DIN EN ISO 178:2019-08 sur une éprouvette rectangulaire de 50 mm de largeur, 0,13 mm d'épaisseur et 100 mm de longueur avec une portée d'appui de 32 mm et une vitesse d'essai de 2 mm/min, de 50 à 60°,
   - un module de flexion, déterminé par sollicitation en milieu de portée dans un essai de flexion en 3 points selon la norme DIN EN ISO 178:2019-08 sur une éprouvette rectangulaire de 50 mm de largeur, 0,13 mm d'épaisseur et 100 mm de longueur avec une portée d'appui de 32 mm et une vitesse d'essai de 2 mm/min, de 3 000 à 6 000 N/mm$^2$.

Fig. 1

Fig. 2

Fig. 3

EP 4 200 925 B1

Fig. 4

22

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015118323 A
- DE 112015000657 T5
- WO 9720358 A